# EUROPÄISCHE PATENTSCHRIFT

(11) **EP 0 298 137 B1**
(45) Veröffentlichungstag und Bekanntmachung des Hinweises auf die Patenterteilung: **30.06.1993**
(21) Anmeldenummer: 87109582.4
(22) Anmeldetag: 03.07.1987
(51) Int. Cl.: G11B 5/00, G11B 11/10, G11B 13/04

(54) **Verfahren zum Aufzeichnen von Daten auf Aufzeichnungsmaterial und derartiges Aufzeichnungsmaterial**
Method for recording data on recording material and such a recording material
Procédé d'enregistrement de données sur un matériau d'enregistrement et matériau d'enregistrement correspondant

(43) Veröffentlichungstag der Anmeldung: 11.01.1989
(73) Patentinhaber: HOECHST AKTIENGESELLSCHAFT, 65926 Frankfurt am Main (DE)
(72) Erfinder: Muchnik, Boris J., Boulder Colorado 80301 (US); Spong, Fred W., Boulder Colorado 80303 (US)

(56) Entgegenhaltungen:
- DE-A- 3 150 403
- US-A- 3 761 645
- PATENT ABSTRACTS OF JAPAN, Band 8, Nr. 282 (P-323)[1719], 22. Dezember 1984; & JP-A-59 148 164
- PATENT ABSTRACTS OF JAPAN, Band 6, Nr. 152 (P-134)[1030], 12. August 1982; & JP-A-57 71 542
- PATENT ABSTRACTS OF JAPAN, Band 7, Nr. 130 (P-202)[1275], 7. Juni 1983; & JP-A-58 48 249
- PATENT ABSTRACTS OF JAPAN, Band 7, Nr. 125 (P-200)[1270], 31. Mai 1983; & JP-A-58 41 451
- PATENT ABSTRACTS OF JAPAN, Band 7, Nr. 134 (P-203)[1279], 11. Juni 1983; & JP-A-58 50 639
- PATENT ABSTRACTS OF JAPAN, Band 7, Nr. 216 (P-225)[1361], 24. September 1983; & JP-A-58 108 045
- IBM TECHNICAL DISCLOSURE BULLETIN, Band 16, Nr. 7, Dezember 1973, Seiten 2365-2366, Armonk, New York, US; G.H. MAY: "Beam addressable high-density magnetic record file"
- IBM TECHNICAL DISCLOSURE BULLETIN, Band 16, Nr. 9, Februar 1974, Seiten 3026-3027, Armonk, New York, US; G.H. MAY: "Beam addressable file with flexible disks"

## Beschreibung

Die Erfindung betrifft ein Verfahren zum Aufzeichnen und Lesen von Informationen, ein Aufzeichnungsmedium und ein Informationsaufzeichnungs- und -wiedergabegerät nach dem Oberbegriff der Ansprüche 1, 2 und 6.

Die Computer-Industrie erzeugt eine enorme und kontinuierlich anwachsende Nachfrage nach Datenspeichern, da ständig neue Anwendungen für derartige Datenspeicher entdeckt werden und Kostenreduktionen bei der Herstellung derartiger Datenspeicher deren Einsatz in der Praxis ermöglichen. Diese Nachfrage hat die kontinuierliche Entwicklung von Magnetaufzeichnung und in jüngerer Zeit die Entwicklung der magnetooptischen Aufzeichnung beschleunigt.

Infolge der Nachfrage nach höherer Speicherkapazität und niedrigeren Kosten stellt sich die Geschichte der magnetischen Aufzeichnung als eine kontinuierliche Entwicklung in Richtung höherer Packungsdichten der Daten dar. Die jüngste Entwicklung der optischen Aufzeichnungstechnologie repräsentiert sich als ein erheblicher Fortschritt in erreichbarer Dichte, insbesondere in bezug auf die Spurdichte.

Ein Aufzeichnungsmedium der eingangs beschriebenen Art ist zusammen mit einem Informationsaufzeichnungs- und - wiedergabegerät für ein derartiges Aufzeichnungsmedium sowie einem Verfahren zum Aufzeichnen und Lesen von Information auf bzw. von einem derartigen Aufzeichnungsmedium aus dem Dokument JP-A - 59/148164 bekannt. Das Aufzeichnungsmedium besteht aus einem Substrat, einer magnetooptischen Aufzeichnungsschicht, ausgewählt aus der Gruppe MnBi, MnAlGe, MnCoBi, MnNiBi, GdCo, GdTbFe, und einer magnetischen Aufzeichnungsschicht aus einer binären Co-Legierung, ternären Co-Cr-Legierung oder Bariumferrit, die beide Vertikalrichtung zur Oberfläche der Aufzeichnungsschicht magnetisierbar sind.

Aus dem Dokument JP-A - 57/71542 ist ein Aufzeichnungsmedium bekannt, das aus einem Substrat, einer magnetischen Aufzeichnungsschicht, die in Vertikalrichtung zur Oberfläche der Aufzeichnungsschicht magnetisierbar ist, einer sogenannten Widerstandsschicht und einer elektrischen leitenden Schicht mit einer senkrechten Anisotropie des elektrischen Widerstandes zu der Oberfläche dieser Schicht besteht. Die sogenannte elektrische Widerstandsschicht dient dem Zweck, den elektrischen Strom in Vertikalrichtung in der elektrisch leitenden Schicht mit der senkrechten Anisotropie zu erhöhen. Die Widerstandsschicht stellt keine Barriereschicht gegenüber chemischen und thermischen Einflüssen dar.

Magnetooptische Aufzeichnungsmedien und Systeme, die eine magnetooptische Aufzeichnungsschicht verwenden sind beispielsweise aus der US-PS 4,466,035 bekannt. Die Informationaufzeichnung auf einer derartigen magneto-optischen Schicht wird dadurch bewirkt, daß ein modulierter Laserstrahl auf die Oberfläche der Schicht gerichtet wird; wobei die Laserstrahlenergie ausreicht, um die Schicht lokal zu erwärmen, beispielsweise bis auf die Curietemperatur der Schicht. Die Schicht ist zu Anfang magnetisch in eine Richtung polarisiert, im allgemeinen senkrecht zu der Schichtoberfläche, und ein Magnetfeld entgegengesetzter Polarität ist nahe der Schicht vorhanden. Diejenigen Flächen der Schicht, die durch der Laserstrahl getroffen werden, ändern infolge des Einflusses des Magnetfeldes ihre Polarität.

Für die magneto-optische Aufzeichnung sind daher Einrichtungen zur Aufzeichnen der Information mit einer Dichte erforderlich, die wesentlich größer ist als die Dichte, welche bei der herkömmlichen Magnetaufzeichnung erzielt werden kann. So muß der Laser u.a. einen sehr schmalen fokussierten Fleck bzw. Punkt von beispielsweise 0,5 bis 1 m Durchmesser erzeugen, so daß die Aufzeichnungsdichte sehr groß werden kann.

Zum Auslesen der aufgezeichneten Information tastet ein Laserstrahl geringerer Intensität als bei der Aufzeichnung die Aufzeichnungsschicht ab, wobei verschiedene Techniken für die Wiedergabe der Information angewandt werden, die im wesentlichen auf der Ausnutzung des Kerr-Effekts beruhen, durch den das reflektierte Licht infolge der Polaritätsunterschiede auf der magnetooptischen Aufzeichnungsschicht unterschiedliche Winkelablenkungen erfährt.

Auch bei der herkömmlichen Magnetaufzeichnungstechnologie geht die Entwicklung in Richtung höherer Aufzeichnungsdichten und niedrigerer Kosten, wobei diese Technologie gewisse innewohnende Vorteile gegenüber der neueren optischen Aufzeichnungstechnologie aufweist. Beispielsweise besteht ein Vorteil der herkömmlichen Magnetaufzeichnung gegenüber den derzeitigen magnetooptischen Aufzeichnungstechnologien in der relativen Kompaktheit und dem geringen Gewicht des Magnetaufzeichnungskopfs. Dies bedeutet im Hinblick auf die Scheibenantriebe, daß der Magnetaufzeichnungskopf infolge seines geringen Gewichts sehr schnell radial positioniert werden kann, mit dem daraus resultierenden Vorteil der kurzen Zugriffszeit für das willkürliche Einlesen und Schreiben von Daten.

Von Nachteil bei der magneto-optischen Aufzeichnung ist zur Zeit die Unmöglichkeit eines "Überschreibens" von Daten, d.h. eine Datenspur muß gelöscht werden, bevor sie neu beschrieben werden kann. Die Löschung erfordert einen Durchgang der Scheibe oder einen zusätzlichen optischen Kopf und erhöht so die Zugriffszeit auf die Daten.

Um diese Nachteile zu vermeiden, wurde auch schon vorgeschlagen, die vorteilhaften Maßnahmen der magnetischen und der magneto-optischen Aufzeichnung miteinander zu kombinieren. So ist beispielsweise in der Literaturstelle "Proceedings of the International Conference", Sept. bis Okt. 1980, Japan, S. 795 bis 797, in dem Artikel "Thermo-magnetic Writing in CrO₂-based Composite Magneto-Optic Medium", Verfasser T. Nomura, eine thermomagnetische Aufzeichnung beschrieben, bei der ein mit Chromoxid beschichtetes Band in Kontakt mit einer Schicht gebracht wird, die eine Garnet-Zwischenschicht besitzt, die mit einem transparenten Träger überzogen ist. Ein Laserstrahl, der den Träger der magnetischen Garnet-Schicht durchstrahlt, wird auf der Chromoxidschicht des Bandes fokussiert, um einen Punkt bzw. Fleck der Chromoxidschicht ungefähr auf die Curietemperatur zu erhitzen, während ein Magnetfilm nahe des Bandes angeordnet ist, um magnetisch die Information in der Chromoxidschicht aufzuzeichnen. Bei dieser Anordnung handelt es sich um einen gepulsten Laserstrahl. Die Bit-Muster der Chromoxidschicht werden auf der magnetischen Garnet-Schicht durch die Streufelder der Chromoxidschicht wiedergegeben. Die Information kann aus der Garnet-Schicht unter Verwendung eines Laserlichts mit einer Wellenlänge ausgelesen werden, die von der dielektrischen Schicht zwischen der Garnet-Schicht und der Chromoxidschicht mittels des magneto-optischen Faraday-Effekts reflektiert wird.

Eine weitere Kombination der magnetischen und magnetooptischen Aufzeichnungen ist in der Zeitschrift "IEEE Transactions on Magnetics", Vol. Mag-19, Nr. 5, September 1983, Seiten 1754-1765, in dem Aufsatz "New Concepts on Magneto-Optical Memories", Verfasser C. Gueugnon et al., beschrieben. Hierbei wird die Information direkt durch senkrecht zur Oberfläche erfolgende Magnetaufzeichnung auf einer Schicht aus einer Legierung mit einem hohen Kerr-Drehwinkel aufgezeichnet. Die Information wird von der Schicht mittels des Kerr-Effekts ausgelesen, in dem eine Anzahl von Fotodetektoren eingesetzt wird, wobei die Ausgänge der Fotodetektoren autokorreliert sind.

Aufgabe der Erfindung ist es, das eingangs beschriebene Aufzeichnungsmedium sowie das Verfahren zum Aufzeichnen und zum Lesen von Information auf diesem Aufzeichnungsmedium so zu verbessern, daß das Aufzeichnungsmedium ein Überschreiben von Aufzeichnungsschicht zu Aufzeichnungsschicht innerhalb des Aufzeichnungsmediums zuläßt und daß die Information in einer magnetischen Aufzeichnungsschicht vorab vor dem Überschreiben auf eine magnetooptische Aufzeichnungsschicht aufgezeichnet ist.

Diese Aufgabe wird erfindungsgemäß gelöst durch ein Verfahren, ein Aufzeichnungsmedium und ein Informationsaufzeichnungs- und -wiedergabegerät gemäß den Ansprüchen 1, 2 und 5.

In Ausgestaltung der Erfindung ist das Substrat eine transparente Scheibe, besteht die magnetcoptische Aufzeichnungsschicht aus einer binären bis quaternären Seltenerden-Übergangsmetall-Legierung, wobei die Seltenerdenelemente aus der Gruppe Gd, Tb, Dy und die Übergangsmetalle aus der Gruppe Fe, Co, Ni ausgewählt sind, und ist zwischen der magnetooptischen und der magnetischen Aufzeichnungsschicht eine dielektrische Schicht als chemische und thermische Barriereschicht angeordnet.

Zweckmäßigerweise besteht die magnetische Aufzeichnungsschicht aus einer Dispersion von γ-Eisenoxidpartikeln in einem Polymerbindemittel oder aus Chromdioxid.

Mit der Erfindung werden die Vorteile erzielt, daß das Aufzeichnungsmaterial und das Verfahren zum Aufzeichnen von Daten eine hohe Spurendichte zulassen, entsprechend der optischen Aufzeichnung, und darüber hinaus rasche Zugriffszeiten ermöglichen, wie sie mit der herkömmlichen Magnetaufzeichnung verknüpft sind. Desweiteren wird durch die Erfindung das Problem des Überschreibens bei der magnetooptischen Aufzeichnung gelöst.

Das Aufzeichnungsmedium nach der Erfindung ermöglicht die magnetische Aufzeichnung auf der magnetischen Aufzeichnungsschicht durch den Einsatz eines gleitenden Magnetaufzeichnungskopfes, der, getragen von einem Luftpolster, knapp oberhalb der magnetooptischen Aufzeichnungsschicht geführt ist.

Während der Aufzeichnung wird ein Laserstrahl auf die magneto-optische Schicht durch die transparente Trägerschicht hindurch fokussiert, wobei dieser Laserstrahl die magneto-optische Schicht über die Curietemperatur oder eine Kompensationstemperatur erhitzt, wie dies in der magneto-optischen Aufzeichnungstechnik bekannt ist. Der Laserstrahl ist ein kontinuierlicher, nicht modulierter Laserstrahl und verringert die Koerzitivkraft der magneto-optischen Schicht in dem sehr eng begrenzten Auftreffbereich des fokussierten Laserstrahls. Dies ermöglicht es, die in der magnetischen Aufzeichnungsschicht aufgezeichnete Information in die magneto-optische Schicht nach Prinzipien zu übertragen, die beim thermomagnetischen Einschreiben und dem magneto-optischen Aufzeichnen bekannt sind. Die thermomagnetisch übertragene Information von einer Spur der magnetischen Aufzeichnungsschicht zu einer sehr schmalen Spur der magneto-optischen Schicht kann mit Hilfe des Kerr-Effekts unter Verwendung eines Laserstrahls mit verringerter Ausgangsleistung ausgelesen werden. Somit kann eine relativ breite Magnetspur zum Aufzeichnen einer engen magneto-optischen Spur herangezogen werden, und es können sehr eng benachbarte magneto-optische Spuren zu verschiedenen Zeiten von getrennten, breiten Magnetaufzeichnungsspuren,voneinander getrennt aufgezeichnet werden.

Die Erfindung wird im folgenden anhand von zwei Ausführungsbeispielen näher erläutert. Es zeigen:
- Figur 1: eine Schnittansicht durch einen Teil eines magnetischen Aufzeichnungsmaterials und zugeordnete Aufzeichnungs- und Leseelemente nach einer ersten Ausführungsform der Erfindung, und
- Figur 2: eine Schnittansicht eines Teils eines Aufzeichnungsmaterials und der zugeordneten Aufzeichnungs- und Leseelemente nach einer zweiten Ausführungsform der Erfindung.

Bei der Erfindung ist davon auszugehen, daß sie zwei Technologien, nämlich die optische Aufzeichnung, d.h. im engeren Sinne die magneto-optische Aufzeichnung, und die mehr oder weniger konventionelle Magnetaufzeichnung miteinander verbindet, wobei der Term "konventionelle" Magnetaufzeichnung sich nicht nur auf eine Magnetisierung der magnetischen Aufzeichnungsschicht parallel zur Oberfläche, sondern ebenso auf die in jüngerer Zeit entwickelte sogenannte "vertikale" Aufzeichnung bezieht, bei der die Magnetisierung senkrecht zu der Oberfläche des Aufzeichnungzmaterials in der magnetischen Aufzeichnungsschicht ist. Es sind somit sowohl die Längs- als auch die Vertikalmagnetisierungsaufzeichnungstechniken im Zusammenwirken mit dem Aufzeichnungsmaterial anwendbar, und ebenso kommen diese Techniken bei dem Verfahren zum Aufzeichnen der, Daten auf dem Aufzeichnungsmaterial zum Einsatz.

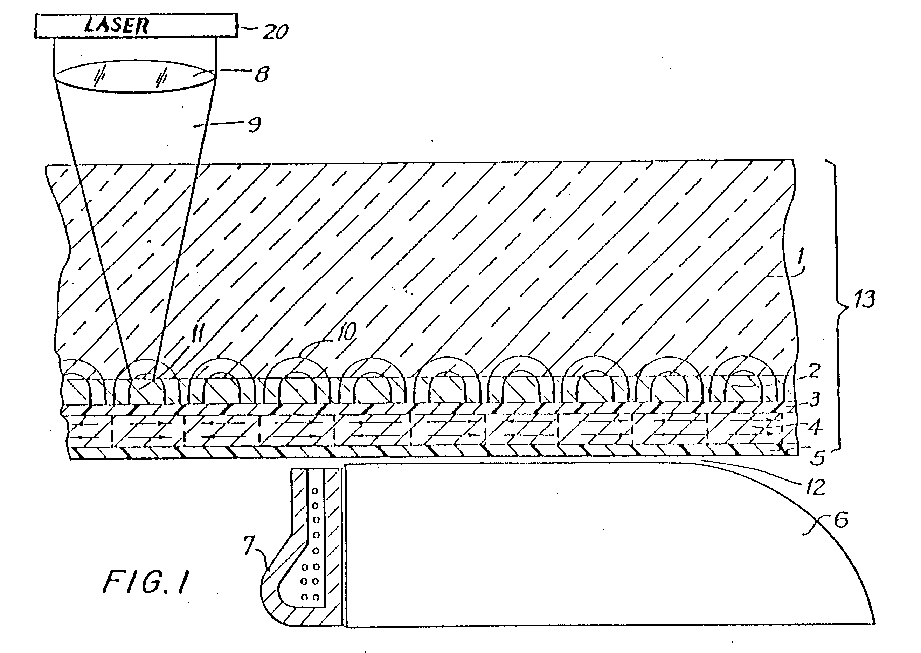

Figur 1 zeigt die wesentlichen Teile einer ersten Ausführungsform der Erfindung, bei der die magnetische Längsaufzeichnung angewandt wird, d.h. die Magnetisierung parallel zur Oberfläche der magnetischen Aufzeichnungsschicht erfolgt. Bei dieser Anordnung ist eine transparente Trägerschicht 1 in Scheibenform mit einer magneto-optischen Schicht 2 mit senkrechter Ansiotropie, d.h. magnetischer Ausrichtung senkrecht zur Oberfläche der Schicht 2, beschichtet. Derartige Materialien sind aus der magneto-optischen Aufzeichnung bekannt und bestehen beispielsweise aus amorphen Legierungen Seltener Erden und Übergangsmetallen. Dabei kann es sich um eine Binär-, Ternär- oder Quaternärlegierung aus Seltenen Erden und Übergangsmetallen handeln. Darüber hinaus können noch weitere Metalle Komponenten solcher Legierungen sein. Eine Isolationsschicht 3 aus thermisch isolierendem Material ist zwischen der magneto-optischen Schicht 2 und einer magnetischen Aufzeichnungsschicht 4 angeordnet. Die Isolationsschicht 3 wird dann vorgesehen, wenn es erforderlich ist, eine Barriere gegen chemische Diffusionen zwischen den Elementen der magneto-optischen Schicht 2 und der magnetischen Aufzeichnungsschicht 4 zu errichten. Die Isolationsschicht 3 dient desweiteren zur thermischen Isolierung der Magnetaufzeichnungsschicht 4 gegenüber den Hitzeeinflüssen des Laserstrahls während der Aufzeichnung, falls die Hitzeentwicklung dies erforderlich machen sollte. Eine Schutzschicht 5 schließt das Aufzeichnungsmaterial 13 nach unten hin ab und ist auf der magnetischen Aufzeichnungsschicht 4 angeordnet, um diese gegen Kratzer zu schützen und um auch einen Barriereschutz der magnetischen Aufzeichnungsschicht gegen Oxidation zu bilden, falls ein oxidierbares Material für die Schicht 2 oder 4 verwendet wird. Beispielsweise kann die magnetische Aufzeichnungsschicht 4 aus einer herkömmlichen Dispersion von γ-Eisenoxid (γ-Fe₂O₃) - Partikeln in einem Polymerbinder bestehen, wie sie üblicherweise bei der Magnetaufzeichnung verwendet wird.

Die transparente, scheibenförmige Trägerschicht 1 kann durch jede herkömmliche, nicht gezeigte Einrichtung in Drehung versetzt werden. Eine Führung bzw. ein Gleitstück 6 herkömmlicher Bauweise schwebt auf einem Luftpolster und trägt einen dünnen Filmkopf bzw. einen magnetischen Schreibkopf 7, benachbart zu der magnetischen Aufzeichnungsschicht 4, wie dies bei der magnetischen Aufzeichnung zum Stand der Technik gehört. Derartige Anordnungen finden sich beispielsweise in den IBM 3380 magnetischen Antrieben der IBM Corporation oder im STC 8380 Magnetscheibenantrieb der Storage Techhology Corporation.

Zum Aufzeichnen von Informationen in dem magnetischen, magneto-optischen Aufzeichnungsmaterial nach der Erfindung wird die Information zunächst auf kreisförmigen Spuren auf der magnetischen Aufzeichnungsschicht 4 mittels des Schreibkopfes 7 in herkömmlicher Weise aufgezeichnet. Die auf der magnetischen Aufzeichnungsschicht 4 aufgezeichneten Spuren sind relativ breit. Eine Linse 8 fokussiert einen Laserstrahl 9 auf die magneto-optische Schicht 2 und heizt diese auf die kritische Temperatur, wie beispielsweise die Curietemperatur oder die Kompensationstemperatur, der magneto-optischenen Schicht auf, wie dies aus der magneto-optischen Aufzeichnung bekannt ist. Im Gegensatz zu den herkömmlichen magneto-optischen Aufzeichnungstechniken ist jedoch der Laserstrahl 9 des Lasers 20 zum Aufzeichnen der Informationen nicht moduliert, d.h. der Laser wird nicht ständig ein- und ausgeschaltet, vielmehr arbeitet er kontinuierlich. Der Laserstrahl reduziert die Koerztivkraft der magneto-optischen Schicht 4 in einem streng abgegrenzten Bereich 11, auf den der Laserstrahl 9 fokussiert ist. Durch die Verringerung der Koerzitivkraft wird es ermöglicht, die in der magnetischen Aufzeichnungsschicht 4 eingeschriebene Information auf die magneto-optische Schicht 2 gemäß den bekannten Prinzipien beim thermomagnetischen Einschreiben und der magneto-optischen Aufzeichnung zu übertragen. Mit anderen Worten bedeutet dies, daß in dem lokal erhitzten Aufzeichnungsbereich 11 die thermomagnetischen Spins der magneto-optischen Schicht zunächst thermisch orientierungslos verlaufen. Sobald es zu der Abkühlung der Bereiche in der Gegenwart der Magnetstreifenfelder 10 des Magnetisierungsmusters 12 kommt, richten sich die thermomagnetischen Spins parallel zu den Feldlinien der Magnetstreifenfelder 10 aus. In diesem Zustand ist somit die Information von der magnetischen Aufzeichnungsschicht 4 auf die magnetooptische Schicht 2 übertragen und kann von die-ser mittels des polaren Kerr-Effekts unter Einsatz des Laserstrahls 9 ausgelesen werden, wobei die Laserleistung gegenüber der Laserleistung für die thermomagnetische Informationsübertragung reduziert ist. Selbstverständlich können auch wahlweise getrennte Laserstrahlen für die thermomagnetische Übertragung und für das Auslesen der Information eingesetzt werden.

Einrichtungen für die optimale Feststellung des magneto-optischen Signals, zum Aufrechterhalten der Fokussierung, zur präzisen Spurführung, zur Rillenziehung in der Trägerschicht und dergleichen sind bei der magnetooptischen Aufzeichnung bekannt und werden nicht im einzelnen beschrieben, obwohl sie bei der praktischen Ausführung der vorliegenden Erfindung erfolgreich eingesetzt werden.

Sobald die Information von einer Spur der magnetischen Aufzeichnungsschicht 4 thermomagnetisch auf die benachbarte, relativ enge Spur der magneto-optischen Schicht 2 übertragen wurde, können die Spuren der magnetischen Aufzeichnungsschicht magnetisch ohne Störung der gespeicherten Information in der magneto-optischen Schicht neu beschrieben werden, da die Koerzitivkraft der magneto-optischen Schicht hoch ist, ausgenommen während des Erhitzens auf eine Übergangstemperatur. Daraus ergibt sich, daß die neu in die magnetische Aufzeichnungsschicht eingeschriebene Information in der zuvor beschriebenen Weise thermomagnetisch auf eine zweite Spur der magneto-optischen Schicht übertragen werden kann, die sehr eng benachbart zu der zuerst beschriebenen Aufzeichnungsspur liegt. Es ist offensichtlich, daß die Dichte der in der magneto-optischen Schicht aufgezeichneten Spur wesentlich größer ist als die Dichte der in der magnetischen Aufzeichnungsschicht aufgezeichneten Spuren.

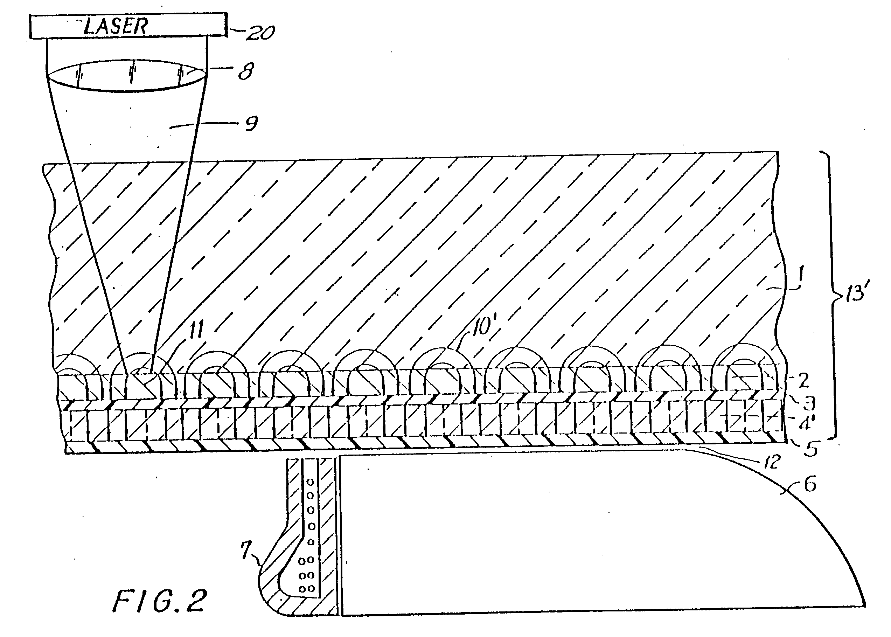

Das in Figur 2 dargestellte weitere Aufzeichnungsmaterial 13' der Erfindung unterscheidet sich von der Ausführungsform nach Figur 1 nur dadurch, daß anstelle einer magnetischen Aufzeichnungsschicht 4 mit Längsaufzeichnung eine magnetische Aufzeichnungsschicht 4' für magnetische Vertikalaufzeichnung Anwendung findet, d.h. bei der die magnetische Ausrichtung senkrecht zur Oberfläche der Aufzeichnungsschicht 4' verläuft und nicht in der Ebene der Aufzeichnungsschicht. Wie aus Figur 2 ersichtlich ist, besitzen die Magnetstreifenfelder 10' der magnetischen Vertikalaufzeichnung räumlich abhängige Komponenten in der magneto-optischen Schicht 4', ebenso wie im Fall der Magnetstreifenfelder 10 der Ausführungsform nach Figur 1, wobei diese Magnetkomponenten für eine durch den Laserstrahl induzierte Übertragung der Information auf die magneto-optische Schicht 2 ausreichen, und das Auslesen der übertragenen Information mittels des polaren Kerr-Effekts erfolgt.

Durch die Erfindung wird das "Überschreiben"-Problem bei der magneto-optischen Aufzeichnung gelöst, wodurch die latente Zeit für das Löschen reduziert wird. Dadurch wird die Zugriffszeit für die magneto-optische Aufzeichnung vergleichbar mit der Zugriffszeit bei der herkömmlichen Magnetaufzeichnungstechnologie, wobei jedoch der Vorteil der höheren Aufzeichnungsdichte bei der magneto-optischen Aufzeichnung beibehalten wird. Es ist auch offensichtlich, daß die magnetische Aufzeichnungsschicht auch wahlweise eine von der Aufzeichnung getrennte Funktion als eine herkömmliche Magnetaufzeichnungsschicht erfüllen kann, so daß das erfindungsgemäße Aufzeichnungsmaterial zwei Betriebsarten zuläßt, nämlich die magneto-optische Betriebsweise, wie sie voranstehend beschrieben ist, und alternativ eine Speicherbetriebsweise für den willkürlichen Zugriff mit sehr hoher Geschwindigkeit, wobei die magnetische Aufzeichnungsschicht nur in einem sehr schnellen magnetischen Aufzeichnungs-/Rückspiel-Modus verwendet wird. Falls höhere Spuraufzeichnungsdichte und Kapazität des optischen Aufzeichnungsmodus erforderlich sind, kann der Antrieb durch herkömmliche Einrichtungen auf diese Betriebsweise umgeschaltet werden, die in bezug auf die Warte- bzw. Zugriffszeit auch sehr schnell ist, obgleich etwas langsamer als die magnetische Betriebsweise infolge des größeren Gewichts des optischen Kopfes im Vergleich zu dem Gewicht des Magnetkopfes.

Da es sich bei dem Laserstrahl um einen kontinuierlichen Strahl und nicht um einen modulierten Strahl handelt, bereitet es keine Schwierigkeiten, eine Mehrfachkanalspuraufzeichnung mit sehr hohen Datenraten durchzuführen, indem Mehrfachköpfe oder integrierte Anordnungen von Dünnfilmmagnetköpfen und Mehrfachstrahlen eingesetzt werden. Dieser Vorteil ergibt sich insbesondere deswegen, weil es leichter ist, Muster bzw. Arrays von fokussierten Brennerflecken kontinuierlicher Laserstrahlen herzustellen, als eine Anzahl von einzeln modulierten Laserstrahlen vorzusehen. Da es nur erforderlich ist, daß die Laserstrahlen kontinuierliche Laserstrahlen sind, können in wirtschaftlicher Weise Gaslaser eingesetzt werden, die die Verwendung kürzerer Wellenlängen zulassen, im Vergleich zu den Wellenlängen, welche die leichter zu modulierenden Diodenlaser liefern. Es ist offensichtlich, daß kürzere Wellenlängen größere Auflösung und höhere Aufzeichnungsdichten ermöglichen, wie sie im Vergleich dazu mit den längeren Wellenlängen erreichbar sind, die von Diodenlasern geliefert werden.

Da die Information zuerst durch eine herkömmliche Magnetaufzeichnung auf einer relativ breiten Spur, im Vergleich zu der Aufzeichnungsspur durch einen fokussierten optischen Strahl, aufgezeichnet wird, ist eine Azimutheinstellung zwischen dem Magnet- und dem optischen Kopf nicht erforderlich, und eine Radialeinstellung ist nur in bezug auf die relativ weite Toleranz der Magnetaufzeichnungsbreite erforderlich.

Das zuvor beschriebene Aufzeichnungsmaterial ist das Ausgangsmaterial für ein scheibenförmiges Aufzeichnungsmedium, das beispielsweise in einem Informationsaufzeichnungs- und -wiedergabegerät eingesetzt wird, das im einzelnen nicht dargestellt ist. Das scheibenförmige Aufzeichnungsmedium besteht gleichfalls aus der transparenten Trägerschicht, der magneto-optischen Schicht und der magnetischen Aufzeichnungsschicht. Die auf der magnetischen Aufzeichnungsschicht 4 bzw. 4' magnetisch aufgezeichneten Daten erzeugen Magnetstreifenfelder 10 bzw. 10'. Die magneto-optische Schicht 2 ist innerhalb dieser Magnetstreifenfelder angeordnet. Bei Bedarf ist zwischen der magnetischen Aufzeichnungsschicht 4 bzw. 4' und der magneto-optischen Schicht 2 noch die Isolationsschicht 3 zwischengeschaltet. Der Laserstrahl 9 bewirkt innerhalb der lokalen Bereiche 11 bzw. 11' eine Verringerung der Koerzitivkraft der magneto-optischen Schicht, so daß eine Ausrichtung der Spins entsprechend der Ausrichtung der Magnetstreifenfelder 10 bzw. 10' in der magneto-optischen Schicht bei deren Abkühlung erfolgt. Der Laser 20 bildet bei diesem Gerät eine Lese- und Schreibeinrichtung zum Adressieren der magneto-optischen Schicht 2 durch die transparente Trägerschicht 1 hindurch, desweiteren ist der Magnetaufzeichnungs- und- wiedergabekopf 7 vorhanden, der die magnetische Aufzeichnungsschicht 4 bzw. 4' auf der Seite adressiert, die von der transparenten Trägerschicht 1 abgewandt ist.

Die Bestrahlung der magneto-optischen Schicht 2 erfolgt mit einem fokussierten kontinuierlichen Laserstrahl 9 mit so ausreichender Energie, daß es zu einer erheblichen Reduktion der Koerzitivkraft der magneto-optischen Schicht in den lokalen Bereichen 11 bzw. 11' auf einen Wert kommt, bei dem sich die lokale Magnetisierung der magneto-optischen Schicht nach den Feldlinien der Magnetstreifenfelder 10 bzw. 10' ausrichten kann.

## Patentansprüche

1. Verfahren zum Aufzeichnen und Lesen von Informationen auf bzw. von einem Aufzeichnungsmedium (13; 13'), bestehend aus einem Substrat (1), einer magnetooptischen Aufzeichnungsschicht (2) und einer magnetischen Aufzeichnungsschicht (4; 4'), in der Information in Spuren aufgezeichnet wird, die Information von einer derartigen Spur thermomagnetisch durch Erwärmen der angrenzenden magnetooptischen Aufzeichnungsschicht (2) mittels Laserstrahl zur Absenkung ihrer Koerzitivkraft auf eine erste Gruppe von Spuren der magnetooptischen Aufzeichnungsschicht, die enger als die Spuren der magnetischen Aufzeichnungsschicht (4; 4') sind, überschrieben wird, indem die lokale Magnetisierung der einzelnen Spur entsprechend den Magnetfeldlinien eines Magnetisierungsmusters ausgerichtet wird, und bei dem die Information von den Spuren der magnetooptischen Aufzeichnungsschicht mit einem Laserstrahl geringerer Intensität als der des Schreib-Laserstrahls ausgelesen wird, dadurch gekennzeichnet, daß Information in die Spuren der magnetischen Aufzeichnungsschicht ohne Störung der gespeicherten Information in den Spuren der magnetooptischen Aufzeichnungsschicht magnetisch neu eingeschrieben wird, daß die neu eingeschriebene Information auf eine zweite Gruppe von Spuren der magnetooptischen Aufzeichnungsschicht thermomagnetisch überschrieben wird, die sehr eng benachbart zu der ersten Gruppe liegt und daß so die Dichte der in der magnetischen Aufzeichnungsschicht aufgezeichneten Spuren kleiner als die Dichte der in der magnetooptischen Aufzeichnungsschicht aufgezeichneten Spuren ist.

2. Aufzeichnungsmedium (13; 13') zum Aufzeichnen und Lesen von Information gemäß dem Verfahren des Anspruchs 1, bestehend aus einem Substrat (1), einer magnetooptischen Aufzeichnungsschicht (2), die eine Achse leichter Magnetisierbarkeit in Vertikalrichtung zur Oberfläche der Aufzeichnungsschicht aufweist, und einer magnetischen Aufzeichnungsschicht (4; 4'), in der Informationen als Magnetisierungsmuster (12) magnetisch aufgezeichnet sind, das Magnetstreifenfelder (10; 10') bildet, deren Magnetfeldlinienverläufe lokale Bereiche (11) der magnetooptischen Aufzeichnungsschicht (2), die durch einen Laserstrahl (9) erhitzt werden, gerichtet magnetisieren, dadurch gekennzeichnet, daß die magnetische Aufzeichnungsschicht (4 bzw. 4') in Längs- bzw. in Vertikalrichtung zur Oberfläche magnetisiert ist und daß die Dichte der in der magnetischen Aufzeichnungsschicht aufgezeichneten Spuren kleiner als die Dichte der in der magnetooptischen Aufzeichnungsschicht aufgezeichneten Spuren ist.

3. Aufzeichnungsmedium nach Anspruch 2, dadurch gekennzeichnet, daß das Substrat (1) eine transparente Scheibe ist, die magnetooptische Aufzeichnungsschicht (2) aus einer binären bis quaternären Seltenerden-Übergangsmetall-Legierung besteht, wobei die Seltenerdenelemente aus der Gruppe Gd, Tb, Dy und die Übergangsmetalle aus der Gruppe Fe, Co, Ni ausgewählt sind, und daß zwischen der magnetooptischen und der magnetischen Aufzeichnungsschicht eine dielektrische Schicht (3) als chemische und thermische Barriereschicht angeordnet ist.

4. Aufzeichnungsmedium nach Anspruch 2, dadurch gekennzeichnet, daß die magnetische Aufzeichnungsschicht (4; 4') aus einer Dispersion von γ-Eisenoxidpartikeln in einem Polymerbindemittel besteht.

5. Aufzeichnungsmedium nach Anspruch 2, dadurch gekennzeichnet, daß die magnetische Aufzeichnungsschicht (4; 4') aus Chromdioxid besteht.

6. Informationsaufzeichnungs- und -wiedergabegerät für ein Aufzeichnungsmedium nach einem oder mehreren der Ansprüche 2 bis 5 zum Aufzeichnen und Lesen von Information gemäß dem Verfahren des Anspruchs 1, mit einem Magnetschreibkopf (7), benachbart zu der magnetischen Aufzeichnungsschicht (4; 4'), auf welche der Magnetschreibkopf die Information in kreisförmigen Spuren während der Drehung des scheibenförmigen Aufzeichnungsmediums (13; 13') als Magnetisierungsmuster (12) einschreibt, und einer optischen Abbildungseinrichtung (8) und einem Laser (20), benachbart zu dem Substrat (1), wobei die optische Abbildungseinrichtung (8) in Gestalt einer Linse einen kontinuierlichen Laserstrahl (9) des Lasers (20) auf die magnetooptische Aufzeichnungsschicht (2) fokussiert, diese in abgegrenzten Bereichen (11) erhitzt und in diesen die Koerzitivkraft absenkt, wobei Magnetstreifenfelder (10) des Magnetisierungsmusters (12) die in der magnetischen Aufzeichnungsschicht (4; 4') eingeschriebene Information auf die magnetooptische Aufzeichnungsschicht (2) überschreiben und mittels des Laserstrahl (9), dessen Laserleistung zum Auslesen gegenüber der Laserleistung für die Informationsüberschreibung reduziert ist, die Informationen von der magnetooptischen Aufzeichnungsschicht (2) auslesbar sind, dadurch gekennzeichnet, daß der Magnetschreibkopf (7) auf einem Gleitstück (6) befestigt ist, das auf einem Luftpolster schwebt und daß für das Überschreiben auf die magnetooptische Aufzeichnungsschicht (2) Spuren geringerer Breite als diejenige der Spuren der magnetischen Aufzeichnungsschicht (4; 4') vorgesehen sind.

## Claims

1. Method for recording and reading information on or from a recording structure (13; 13') comprising a substrate (1), a magneto-optic recording layer (2) and a magnetic recording layer (4; 4') on which information is recorded in tracks and, by heating the adjacent magneto-optic recording layer (2) with the aid of a laser beam to reduce its coercivity, the information is thermomagnetically transferred from such a track to a first group of tracks of the magneto-optic recording layer, which are narrower then the tracks of the magnetic recording layer (4; 4'), by orienting the local magnetization of the individual track in accordance with the magnetic field lines of a magnetization pattern, and in which the information is read out from the tracks of the magneto-optic recording layer using a laser beam of lower intensity than that of the write-laser beam, characterized in that information is again recorded magnetically in the tracks of the magnetic recording layer, without disturbing the information stored in the tracks of the magneto-optic recording layer, that the newly recorded information is thermomagnetically transferred to a second group of tracks of the magneto-optic recording layer, which is very closely spaced to the first group and that thus the density of the tracks recorded on the magnetic recording layer is lower than the density of the tracks recorded on the magneto-optic recording layer.

2. Recording structure (13; 13') for recording and reading information according to the method as claimed in claim 1, comprising a substrate (1), a magneto-optic recording layer (2) having an axis of easy magnetizability in the vertical direction to the surface of the recording layer, and a magnetic recording layer (4; 4'), on which information is magnetically recorded as a magnetization pattern (12) producing fringing magnetic fields (10; 10') the magnetic field line distributions of which effect an aligned magnetization of local regions (11) of the magneto-optic recording layer (2), which are heated by a laser beam (9), characterized in that the magnetic recording layer (4 or 4') is magnetized in the longitudinal or vertical direction to the surface and that the density of the tracks recorded on the magnetic recording layer is lower than the density of the tracks recorded on the magneto-optic recording layer.

3. A recording structure as claimed in claim 2, characterized in that the substrate (1) is a transparent disk, the magneto-optic recording layer (2) comprises a binary to quaternary alloy of rare earths and transition metals, the rare earth elements being selected from the group consisting of Gd, Tb, Dy and the transition metals being selected from the group consisting of Fe, Co, Ni, and that a dielectric layer (3) is disposed between the magneto-optic and the magnetic recording layers to form a chemical and thermal barrier layer.

4. A recording structure as claimed in claim 2, characterized in that the magnetic recording layer (4; 4') is constituted of a dispersion of gamma ferric oxide particles in a polymer binder.

5. A recording structure as claimed in claim 2, characterized in that the magnetic recording layer (4; 4') is constituted of chromium dioxide.

6. Information recording and playback device for use with a recording structure as claimed in any one or more of claims 2 to 5, for recording and reading information according to the process as claimed in claim 1, the device comprising a magnetic write head (7) adjacent the magnetic recording layer (4; 4') onto which the information is written by the magnetic write head in circular tracks during rotation of the disk-shaped recording structure (13; 13'), as a magnetization pattern (12), and an optical imaging setup (8) and a laser (20) adjacent the substrate (1), the optical imaging setup (8) in the form of a lens focussing a continuous wave laser beam (9) from the laser (20) onto the magneto-optic recording layer (2) thus heating it in localized regions (11) and reducing its coercivity in these regions, with fringing magnetic fields (10) of the magnetization pattern (12) transferring the information recorded on the magnetic recording layer (4; 4') to the magneto-optic recording layer (2), and by means of the laser beam (9) employed at a power level which, for readout, is reduced from that used for the information transfer the information can be read out from the magneto-optic recording layer (2), characterized in that the magnetic write head (7) is attached to a slider (6) adapted to fly on a film of air and that, for transfer onto the magneto-optic recording layer (2), tracks are provided which are narrower than the tracks of the magnetic recording layer (4; 4').

## Revendications

1. Procédé d'enregistrement et de lecture d'informations sur ou à partir d'un support d'enregistrement (13;13'), constitué par un substrat (1), une couche d'enregistrement magnéto-optique (2) et une couche d'enregistrement magnétique (4;4'), dans laquelle l'information est enregistrée suivant des pistes, l'information d'une telle piste étant enregistrée en surinscription, par effet thermomagnétlque sous l'effet de l'échauffement de la couche d'enregistrement magnéto-optique contiguë (2) au moyen d'un faisceau laser afin de réduire sa force coercitive, sur un premier groupe de pistes de la couche d'enregistrement magnéto-optique, qui sont plus étroites que les pistes de la couche d'enregistrement magnétique (4;4'), par le fait que l'almantation locale de la piste individuelle est orientée conformément aux lignes du champ magnétique d'un modèle d'aimantation, et selon lequel l'information des pistes de la couche d'enregistrement magnéto-optique est lue à l'aide d'un faisceau laser possédant une intensité inférieure à celle du faisceau laser d'enregistrement, caractérisé en ce que l'information est à nouveau enregistrée magnétiquement sur les pistes de la couche d'enregistrement magnétique, sans perturbation de l'information mémorisée dans les pistes de la couche d'enregistrement magnéto-optique, que l'information nouvellement enregistrée est enregistrée en surinscription par voie thermomagnétique, sur un second groupe de pistes de la couche d'enregistrement magnétooptique, qui est situé à proximité directe du premier groupe et qu'ainsi la densité des pistes enregistrées dans la couche d'enregistrement magnétique est inférieure à la densité des pistes enregistrées dans la couche d'enregistrement magnéto-optique.

2. Support d'enregistrement (13; 13') pour l'enregistrement et la lecture d'une information selon le procédé de la revendication 1, constitué par un substrat (1), une couche d'enregistrement magnéto-optique (2), qui possède un axe d'aimantation facile qui s'étend perpendiculairement à la surface de la couche d'enregistrement, et une couche d'enregistrement magnétique (4; 4'), dans laquelle les informations sont enregistrées magnétiquement sous la forme d'un modèle d'aimantation (12), qui forme des champs de franges magnétiques (10;10'), dont les formes des lignes de champs aimantent d'une manière dirigée des régions locales (11) de la couche d'enregistrement magnéto-optique (2), qui sont chauffées à l'aide d'un faisceau laser (9), caractérisé en ce que la couche d'enregistrement magnétique (4 ou 4') est aimantée dans une direction longitudinale ou dans une direction perpendiculaire à la surface et que la densité des pistes enregistrées sur la couche d'enregistrement magnétique est inférieure à la densité des pistes enregistrées dans la couche d'enregistrement magnéto-optique.

3. Support d'enregistrement selon la revendication 2, caractérisé en ce que le substrat (1) est un disque transparent, que la couche d'enregistrement magnéto-optique (2) est constituée par un alliage binaire à quaternaire terres rares-métaux de transition, les éléments des terres rares étant choisis dans le groupe Gd, Tb, Dy et les métaux de transition dans le groupe Fe, Co, Ni, et qu'une couche diélectrique (3) est disposée en tant que couche formant barrière chimique et thermique entre la couche d'enregistrement magnéto-optique et la couche d'enregistrement magnétique.

4. Support d'enregistrement selon la revendication 2, caractérisé en ce que la couche d'enregistrement magnétique (4;4') est constituée par une dispersion de particules d'oxyde de fer γ, dans un liant polymére.

5. Support d'enregistrement selon la revendication 2, caractérisé en ce que la couche d'enregistrement magnétique (4;4') est formée de bioxyde de chrome.

6. Appareil d'enregistrement et de reproduction d'informations pour un support d'enregistrement selon une ou plusieurs des revendications 2 à 5 pour l'enregistrement et la lecture d'une information conformément au procédé de la revendication 1, comportant une tête d'enregistrement magnétique (7), qui est voisine de la couche d'enregistrement magnétique (4;4'), sur laquelle la tête d'enregistrement magnétique inscrit l'information suivant des pistes circulaires lors de la rotation du support d'enregistrement en forme de disque (13;13'), sous la forme d'un modèle d'aimantation (12), et un dispositif optique de formation d'images (8) et un laser (20), disposés à proximité du substrat (1), et dans lequel le dispositif optique de formation d'images (8) sous la forme d'une lentille focalise un faisceau continu (9) du laser (20) sur la couche d'enregistrement magnéto-optique (2), et chauffe cette couche dans des régions délimitées (11) et réduit la force coercitive dans ces régions, et dans lequel des champs de franges magnétiques (10) du modèle d'aimantation (12) enregistrent en surinscription l'information inscrite dans la couche d'enregistrement magnétique (4;4'), sur la couche d'enregistrement magnéto-optique (2) et dans lequel les informations peuvent être lues à partir de la couche d'enregistrement magnéto-optique (2) à l'aide du faisceau laser (9), dont la puissance pour la lecture est réduite par rapport à la puissance du laser pour l'enregistrement de l'information en surinscription, caractérisé en ce que la tête d'enregistrement magnétique (7) est fixée sur un curseur (6), qui flotte sur un coussin d'air, et que pour l'enregistrement en surinscription sur la couche d'enregistrement magnéto-optique (2), il est prévu des pistes possédant une largeur inférieure à celle des pistes de la couche d'enregistrement magnétique (4;4').
